# EUROPÄISCHE PATENTSCHRIFT

(11) **EP 2 105 335 B1**
(45) Veröffentlichungstag und Bekanntmachung des Hinweises auf die Patenterteilung: **23.05.2012**
(21) Anmeldenummer: 09155894.0
(22) Anmeldetag: 23.03.2009
(51) Int. Cl.: B60J 7/22

(54) **Windstoppeinrichtung**
Wind blocking device
Dispositif pare-vent

(30) Priorität: 25.03.2008 DE 102008016908
(43) Veröffentlichungstag der Anmeldung: 30.09.2009
(73) Patentinhaber: Scambia Industrial Developments Aktiengesellschaft, 9494 Schaan (LI)
(72) Erfinder: Riehle, Jörg, 71679, Asperg (DE); Neumann, Peter, 71720, Oberstenfeld (DE)
(74) Vertreter: Hoeger, Stellrecht & Partner Patentanwälte

(56) Entgegenhaltungen:
- EP-A- 1 514 714
- EP-A- 1 892 136

## Beschreibung

Die Erfindung betrifft eine Windstoppeinrichtung für Kraftfahrzeuge, insbesondere für Cabrio-Fahrzeuge mit zwei Überrollschutzeinheiten, umfassend eine auf einer Welle aufwickelbare Flachmaterialbahn, die von einer aufgewickelten und eingefahrenen Stellung in eine abgewickelte ausgefahrene und sich flächenhaft erstreckende Stellung, und umgekehrt, bringbar ist, und mit einem die Flachmaterialbahn an einem sich ungefähr parallel zur Welle erstreckenden Endbereich haltenden Träger.

Bei derartigen Windstoppeinrichtungen besteht das Problem, dass diese nicht für Kraftfahrzeuge, insbesondere Cabrio-Fahrzeuge mit zwei im Abstand voneinander angeordneten und optisch ansprechend geformten Überrollschutzeinheiten, insbesondere Überrollbügel, geeignet sind, da keine Möglichkeit besteht, den von einer rechteckigen Form abweichenden, insbesondere sich mit zunehmendem Abstand von einer Oberseite der Karosserie in Richtung parallel zur Welle erweiternden, Zwischenraum zwischen den Überrollbügeln mit der Flachmaterialbahn in geeigneter Weise zu überdecken und dabei ein ansprechendes Aussehen der Windstoppeinrichtung zu gewährleisten. EP 1 514 714 A1 zeigt eine Windstoppeinrichtung gemäß dem Oberbegriff der Anspruchs 1.

Der Erfindung liegt daher die Aufgabe zugrunde, eine Windstoppeinrichtung der gattungsgemäßen Art derart zu verbessern, dass diese in einfacher Weise bei einem Kraftfahrzeug mit zwei im Abstand voneinander angeordneten Überrollschutzeinheiten geeignet ist.

Diese Aufgabe wird bei einer Windstoppeinrichtung der gattungsgemäßen Art erfindungsgemäß durch die Merkmale der kennzeichnenden Teils des Anspruchs 1 gelöst.

Der Vorteil der erfindungsgemäßen Lösung ist darin zu sehen, dass durch die quer zur Ausfahrrichtung bewegbaren Führungselemente die Möglichkeit geschaffen ist, einerseits den Träger dann, wenn dieser in Ausfahrrichtung oder Einfahrrichtung bewegt werden soll, zu führen, andererseits die Möglichkeit gegeben ist, den Zwischenraum zwischen den Überrollschutzelementen dann freizugeben, wenn der Träger in seiner eingefahrenen Stellung steht.

Hinsichtlich der Bewegbarkeit der Führungselemente quer zur Ausfahrrichtung sind die unterschiedlichsten Lösungen denkbar.

So wäre beispielsweise eine Scherenkinematik denkbar, die es erlaubt, die Führungselemente zwischen der den Zwischenraum zwischen den Überrollschutzeinheiten im Wesentlichen freigebenden Nichtgebrauchsstellung und der Gebrauchsstellung hin und her zu bewegen.

Eine konstruktiv besonders einfache Lösung sieht vor, dass die Führungselemente durch eine Schwenkbewegung zwischen der Nichtgebrauchsstellung und der Gebrauchsstellung bewegbar sind.

Insbesondere ist ein Schwenklager im Bereich eines unteren, der Karosserie zugewandten Endes der Führungselemente angeordnet.

Dabei liegen die Schwenklager zweckmäßigerweise nahe oder ungefähr in Höhe einer Oberseite der Karosserie.

Ferner sind die Schwenklager nahe an den Überrollschutzeinheiten, vorzugsweise an diese angrenzend oder an diesen angeordnet.

Ferner wurden hinsichtlich der Lagerung der Führungselemente keine näheren Angaben gemacht.

Eine Lösung sieht vor, dass die Führungselemente an der Fahrzeugkarosserie bewegbar gehalten sind.

So sieht eine vorteilhafte Lösung vor, dass die Führungselemente an den Überrollschutzeinheiten bewegbar gelagert sind.

Eine andere vorteilhafte Lösung sieht vor, dass die Führungselemente an einem die Welle lagernden Teil gehalten sind.

Das Rahmenteil könnte beispielsweise ebenfalls ein in die Fahrzeugkarosserie eingebautes Teil sein.

Eine besonders zweckmäßige Lösung sieht vor, dass das Teil Bestandteil eines Gehäuses ist, in welchem die Welle aufgenommen ist.

Insbesondere ist dabei vorgesehen, dass die Welle mitsamt der auf dieser aufwickelbaren Flachmaterialbahn in dem Gehäuse aufgenommen ist.

Ein derartiges Gehäuse kann entweder stationär an der Karosserie des Cabrio-Fahrzeugs montiert werden oder es ist denkbar, dass das Gehäuse abnehmbar an der Karosserie gehalten ist.

Die Führungselemente sind bei einer Ausführungsform in der Gebrauchsstellung ungefähr parallel zueinander ausgerichtet, so dass die Flachmaterialbahn einen näherungsweise rechteckigen Zuschnitt aufweisen kann.

Um den Zwischenraum zwischen den Überrollschutzeinheiten möglichst weitgehend freizugeben, sind die Führungselemente in der Nichtgebrauchsstellung erfindungsgemäß so angeordnet, dass deren obere Enden einen größeren Abstand voneinander aufweisen, als deren untere, an die Oberseite der Karosserie angrenzende Enden.

Ferner sind vorzugsweise die Führungselemente in der Nichtgebrauchsstellung im Bereich der Überrollschutzeinheiten angeordnet, das heißt sie geben den zwischen den Überrollschutzeinheiten vorhandenen Zwischenraum im Wesentlichen frei und stehen insbesondere nicht in diesen Zwischenraum nennenswert hinein, so dass in der Nichtgebrauchsstellung der Führungselemente das optische Erscheinungsbild des Zwischenraums zwischen den Überrollschutzeinheiten nur in einem geringen Maße, vorzugsweise nur unwesentlich beeinträchtigt ist.

Für die Anordnung der Führungselemente in der Nichtgebrauchsstellung sind die unterschiedlichsten Lösungen denkbar.

Eine Lösung sieht vor, dass die Führungselemente in der Nichtgebrauchsstellung zumindest teilweise in jeweils eine Aufnahme hineinbewegbar sind.

Besonders günstig ist es, wenn die Führungselemente in die Aufnahmen im Wesentlichen vollständig einfahrbar sind.

Dabei können die Aufnahmen in unterschiedlichster Art und Weise angeordnet sein. Eine Lösung sieht vor, dass die Aufnahmen in den Überrollschutzeinheiten vorgesehen sind.

In diesem Fall ist beispielsweise die jeweilige Aufnahme in einer Verkleidung der jeweiligen Überrollschutzeinheit vorgesehen, in welcher dann das Eigentliche, die Insassen gegen ein Überrollen schützende Versteifungselement, insbesondere ein Versteifungsrohrbügel, verläuft.

Eine andere vorteilhafte Lösung sieht vor, dass die Aufnahme in einem auf den Überrollschutzeinheiten sitzenden Gehäuseteil angeordnet ist.

Eine weitere Lösung sieht vor, dass die Aufnahmen in an den Überrollschutzeinheiten, insbesondere an den einander zugewandten Seiten der Überrollschutzeinheiten, anliegenden Gehäuseelementen vorgesehen sind.

Hinsichtlich der Anordnung der Welle zum Aufwickeln der Flachmaterialbahn wurden im Zusammenhang mit der bisherigen Beschreibung der einzelnen Ausführungsbeispiele keine näheren Angaben gemacht.

Insbesondere ist die Welle in einem Karosseriebereich angeordnet, der sich zwischen den Überrollschutzeinheiten in Fahrtrichtung erstreckt, so dass die Welle in Fahrtrichtung vor oder hinter den Überrollschutzeinheiten oder zwischen den Überrollschutzeinheiten angeordnet sein kann.

So ist es bei einer Ausführungsform denkbar, die Welle zum Aufwickeln der Flachmaterialbahn an der Karosserie anzuordnen.

Vorzugsweise ist dabei die Welle zum Aufwickeln der Flachmaterialbahn unterhalb einer Oberseite der Karosserie in dieser verdeckt angeordnet, so dass die Flachmaterialbahn aus einer schlitzförmigen Öffnung in der Oberseite der Karosserie aus dieser herausziehbar ist, während der Träger in der eingefahrenen Endstellung auf die Oberseite der Karosserie auflegbar oder von der Oberseite abhebbar in die ausgefahrene Endstellung bewegbar ist.

Eine andere vorteilhafte Lösung sieht vor, dass die Welle zum Aufwickeln der Flachmaterialbahn in einem auf der Karosserie aufsitzenden Gehäuse angeordnet ist.

Ein derartiges auf der Karosserie, insbesondere einer Oberseite der Karosserie, aufsitzendes Gehäuse kann fest mit der Karosserie verbunden sein.

Eine andere vorteilhafte Lösung sieht vor, dass das Gehäuse von der Karosserie lösbar angeordnet ist und in einem anderen Innenraum des Kraftfahrzeugs, beispielsweise einem Gepäckraum, verstaubar ist.

Hinsichtlich des Zwischenraums zwischen den in ihrer Gebrauchsstellung stehenden Führungselementen und den Überrollschutzeinrichtungen wurden bislang keine näheren Angaben gemacht, insbesondere wurde nicht näher definiert, wie der Zwischenraum strömungssicher verschlossen werden soll.

Aus diesem Grund ist vorzugsweise vorgesehen, dass in der Gebrauchsstellung der Führungselemente zwischen den Führungselementen und den diesen zugewandten Überrollschutzeinrichtungen Strömungsschutzelemente vorgesehen ist.

Ein derartiges Strömungsschutzelement könnte beispielsweise ein in sich steifes Element sein. Dieses hätte jedoch den Nachteil, dass dann das Strömungsschutzelement zum Bewegen des Führungselements von der Gebrauchsstellung in die Nichtgebrauchsstellung entnommen und gelagert werden muss.

Aus diesem Grund ist vorzugsweise vorgesehen, dass die Strömungsschutzelemente ein Element aus einem biegeschlaffen Material sind.

Besonders zweckmäßig ist es dabei, wenn das Strömungsschutzelement von einem Aufspannzustand, der bei in Gebrauchsstellung stehenden Führungselementen vorliegt, in einen Verstauzustand bringbar ist, der bei in Nichtgebrauchsstellung stehenden Führungselementen vorliegt, und umgekehrt.

Eine derartige Lösung hat den großen Vorteil, dass sich damit die Strömungsschutzelemente in einfacher Weise verstauen lassen.

Ein derartiger Verstauzustand der Strömungsschutzelemente kann dabei in unterschiedlichster Art und Weise erreicht werden. Eine vorteilhafte Lösung sieht vor, dass die Strömungsschutzelemente im Verstauzustand gefaltet sind.

Eine andere vorteilhafte Lösung sieht vor, dass die Strömungsschutzelemente im Verstauzustand auf eine Welle aufgerollt sind.

Bei einer besonders günstigen Ausführungsform ist dabei vorgesehen, dass das jeweilige Strömungsschutzelement im Verstauzustand in einer Aufnahme aufgenommen ist und damit einerseits vor Verschmutzungen geschützt wird und andererseits in einem optisch unauffälligen Zustand dann verbleiben kann, wenn das jeweilige Führungselement in der Nichtgebrauchsstellung steht.

Hinsichtlich der Anordnung der Aufnahmen für die Strömungsschutzelemente wurden keine weiteren Angaben gemacht.

Eine vorteilhafte Lösung sieht vor, dass die Aufnahme für das jeweilige Strömungsschutzelement in der jeweiligen Überrollschutzeinheit vorgesehen ist.

Beispielsweise lässt sich dies dadurch realisieren, dass die Aufnahme in einer Verkleidung der jeweiligen Überrollschutzeinheit vorgesehen ist.

Eine andere vorteilhafte Lösung sieht vor, dass die Aufnahme in einem an der jeweiligen Überrollschutzeinheit angeordneten Gehäuseelement vorgesehen ist.

Insbesondere lässt sich eine derartige Aufnahme für das Strömungsschutzelement dadurch realisieren, dass diese in einem Seitenflügel des Gehäuses angeordnet ist, welches die Welle und die aufgewickelte Flachmaterialbahn aufnimmt.

Im Zusammenhang mit der vorstehend beschriebenen Lösung, bei welcher ein Verstauen des jeweiligen Strömungsschutzelements in einer Aufnahme erfolgt, könnten prinzipiell die Aufnahme für das Strömungsschutzelement und - sofern vorgesehen - die Aufnahme für das Führungselement getrennt voneinander vorgesehen sein.

Eine besonders vorteilhafte Lösung sieht jedoch vor, dass die Aufnahme für das Strömungsschutzelement auch eine Aufnahme für das entsprechende Führungselement darstellt.

In diesem Fall kann günstigerweise die Aufnahme so ausgebildet sein, dass das jeweilige Führungselement in der Nichtgebrauchsstellung die Aufnahme abdeckt, in welcher auch das Strömungsschutzelement angeordnet ist.

Ferner wurden hinsichtlich der Ausbildung der Strömungsschutzelemente noch keine näheren Angaben gemacht. Beispielsweise könnten die Strömungsschutzelemente aus einem beliebigen luftundurchlässigen oder im Wesentlichen luftdurchlässige biegeschlaffen Material sein.

Besonders günstig ist es jedoch, wenn die Strömungsschutzelemente aus im Wesentlichen demselben Flachmaterial hergestellt sind, wie die Flachmaterialbahn, so dass der optische Eindruck der Strömungsschutzelemente und der Flachmaterialbahn im Wesentlichen derselbe ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: eine perspektivische Ansicht eines Cabrio-Fahrzeugs mit einer erfindungsgemäßen Windstoppeinrichtung;
- Figur 2: eine schematische Darstellung eines ersten Ausführungsbeispiels einer erfindungsgemäßen Windstoppeinrichtung in ihrer aus- gefahrenen Endstellung zwischen Überrollschutzeinheiten;
- Figur 3: eine Darstellung ähnlich Figur 1 des ersten Ausführungsbeispiels der erfindungsgemäßen Windstoppeinrichtung in ihrer ein- gefahrenen Endstellung;
- Figur 4: eine vergrößerte aufgebrochene Darstellung einer Aufnahme für ein zugehöriges Führungselement und einem zugehörigen Strömungsschutzelement;
- Figur 5: eine Darstellung ähnlich Figur 2 des ersten Ausführungsbeispiels in einer Zwischenstellung zwischen der eingefahrenen Endstellung und der ausgefahrenen Endstellung;

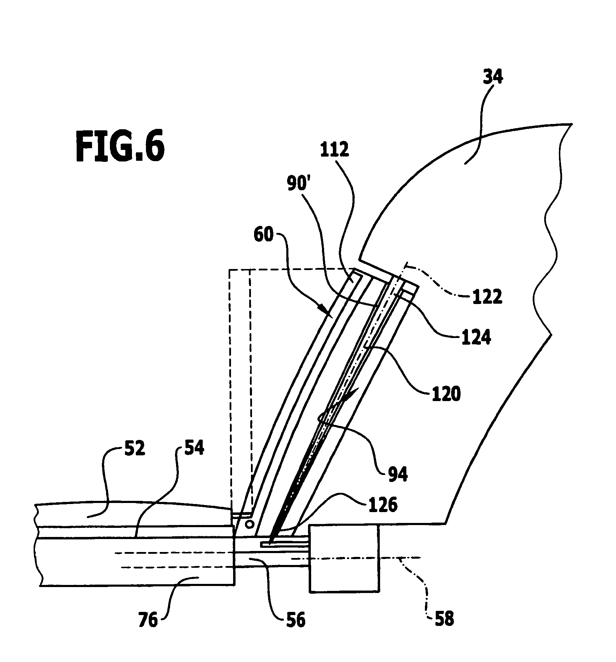

- Figur 6: eine Darstellung ähnlich Figur 4 eines zweiten Ausführungs- beispiels einer erfindungsgemäßen Windstoppeinrichtung;
- Figur 7: eine vergrößerte Darstellung einer Lagerung einer Welle zum Aufwickeln der Flachmaterialbahn bei einem dritten Ausführungs- beispiel;
- Figur 8: eine Darstellung ähnlich Figur 3 bei einem vierten Ausführungs- beispiel einer erfindungsgemäßen Windstoppeinrichtung;
- Figur 9: eine Darstellung ähnlich Figur 5 bei dem vierten Ausführungs- beispiel der erfindungsgemäßen Windstoppeinrichtung;
- Figur 10: eine Darstellung ähnlich Figur 6 bei dem vierten Ausführungs- beispiel der erfindungsgemäßen Windstoppeinrichtung;
- Figur 11: eine Darstellung ähnlich Figur 3 bei einem fünften Ausführungs- beispiel der erfindungsgemäßen Windstoppeinrichtung;
- Figur 12: eine Darstellung ähnlich Figur 5 bei dem fünften Ausführungs- beispiel der erfindungsgemäßen Windstoppeinrichtung;
- Figur 13: eine Darstellung ähnlich Figur 2 bei dem fünften Ausführungs- beispiel der erfindungsgemäßen Windstoppeinrichtung, und
- Figur 14: eine vergrößerte Darstellung eines Gehäuses mit Gehäuseflügel und an diesem schwenkbar gelagertem Führungselement bei dem fünften Ausführungsbeispiel der erfindungsgemäßen Windstoppeinrichtung.

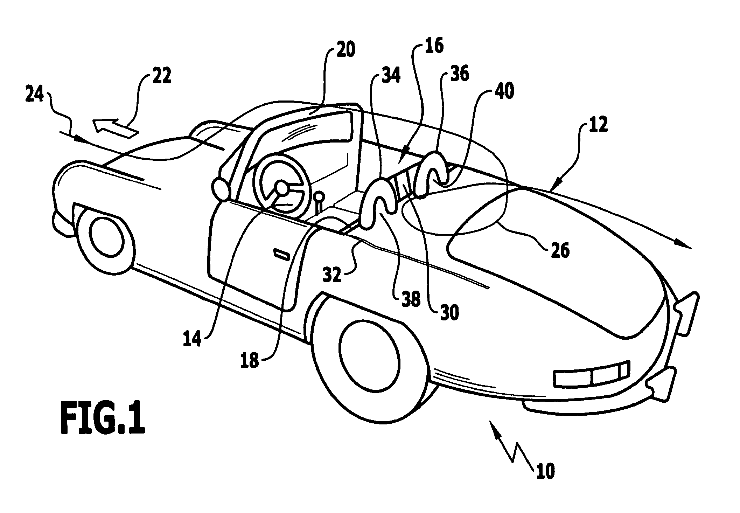

Bei einem in Figur 1 dargestellten Ausführungsbeispiel eines Cabrio-Fahrzeugs 10 umfasst eine Karosserie 12 einen Fahrgastraum 14, in welchem eine Vordersitzanlage 16 angeordnet ist, wobei hinter der Vordersitzanlage 16, und zwar insbesondere hinter einer Lehne 18 der Vordersitze, der Fahrgastraum 14 endet.

Frontseitig des Fahrgastraums 14 ist eine Windschutzscheibe 20 angeordnet, welche bei einem Bewegen des Cabrio-Fahrzeugs 10 in einer Fahrtrichtung 22 eine frontseitig der Karosserie 12 auftretende Luftströmung 24 anhebt und über den Fahrgastraum 14 hinwegströmen lässt, wobei sich hinter dem Fahrgastraum 14 ein Wirbel 26 der Luftströmung 24 bildet, der sich bis in den Fahrgastraum 14 hinein ausdehnt, sofern nicht hinter der Vordersitzanlage 16 eine Windstoppeinrichtung 30 im Bereich von sich über eine Gürtellinie 32 der Karosserie 12 erhebenden Überrollbügeln 34, 36 angeordnet ist, wobei die Überrollbügel 34, 36 vorzugsweise umgekehrt U-förmig ausgebildet sind und jeweils einen Durchlass 38, 40 aufweisen, der mit einem strömungshindernden Element verschlossen ist, welches unabhängig von der Windstoppeinrichtung 30 ausgebildet ist, die sich zwischen den Überrollbügeln 34, 36 erstreckt.

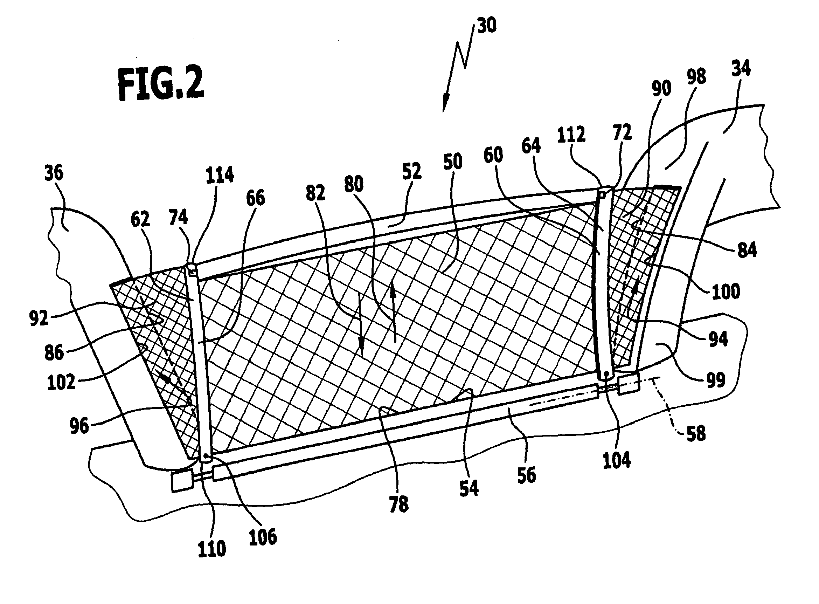

Wie in Figur 2 dargestellt, umfasst die Windstoppeinrichtung 30 eine Flachmaterialbahn 50, welche sich in ihrer ausgefahrenen Stellung zwischen einem oberen Träger 52 erstreckt, der in einem Abstand von einer Oberseite 54 der Karosserie steht, und einer Welle 56, die bei diesem ersten Ausführungsbeispiel unterhalb der Oberseite 54 der Karosserie 12 um eine Achse 58 drehbar gelagert ist.

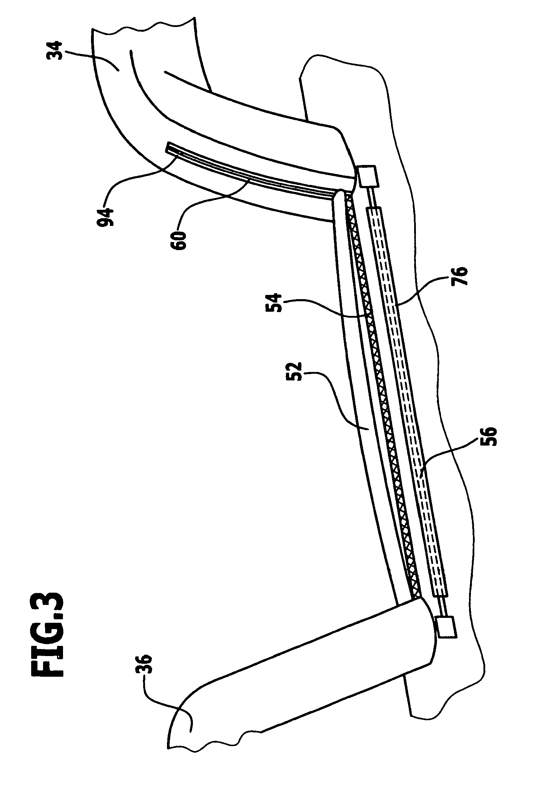

Geführt wird der Träger 52 relativ zur Karosserie 12 durch seitliche Führungselemente 60, 62, die sich ebenfalls über die Oberseite 54 der Karosserie 12 erheben und Führungen 64, 66 aufweisen, in welchen der Träger 52 mit Führungskörpern 72, 74 geführt ist, wobei der Träger 52 längs der Führungen 64, 66 zwischen der in Figur 2 dargestellten ausgefahrenen Stellung und einer in Figur 3 dargestellten eingefahrenen Stellung bewegbar ist, wobei in der eingefahrenen Stellung der Träger 52 auf der Oberseite 54 der Karosserie 12 aufliegt und die Flachmaterialbahn 50 auf die Welle 56 zu einem Wickel 76 aufgewickelt ist.

Ferner überdeckt in der eingefahrenen Stellung der Träger 52 eine Öffnung 78 in der Oberseite 54 der Karosserie 12, durch welche die Flachmaterialbahn 50 von der Welle 56 zum Träger 52 geführt ist.

Um den Träger 52 in einer Ausfahrrichtung 80 zwischen der in Figur 2 dargestellten ausgefahrenen Stellung und der in Figur 3 dargestellten eingefahrenen Stellung hin- und herbewegen zu können, verlaufen bei der Bewegung des Trägers 52 in der Ausfahrrichtung 80 oder in einer dieser entgegengesetzten Einfahrrichtung 82 die Führungselemente 60, 62 im Wesentlichen parallel zueinander, so dass auch die Führungen 64, 66 der Führungselemente 60, 62 sich in dieser Gebrauchsstellung ebenfalls parallel zueinander erstrecken und die durch den Träger 52 in im Wesentlichen konstantem Abstand gehaltenen Führungskörper 72, 74 in den Führungen 64, 66 gleiten können.

Somit entsteht zwischen den im Wesentlichen parallel zueinander verlaufenden Führungselementen 60, 62 und den Überrollbügeln 34, 36, insbesondere zwischen einander zugewandten Seitenflächen 84 und 86 der

Überrollbügel 34, 36 ein Zwischenraum, welcher durch Strömungsschutzelemente 90, 92 dann verschlossen ist, wenn die Führungselemente 60, 62 in ihrer Gebrauchsstellung stehen, um den Träger 52 bei seiner Bewegung in der Ausfahrrichtung 80 oder der Einfahrrichtung 82 zu führen.

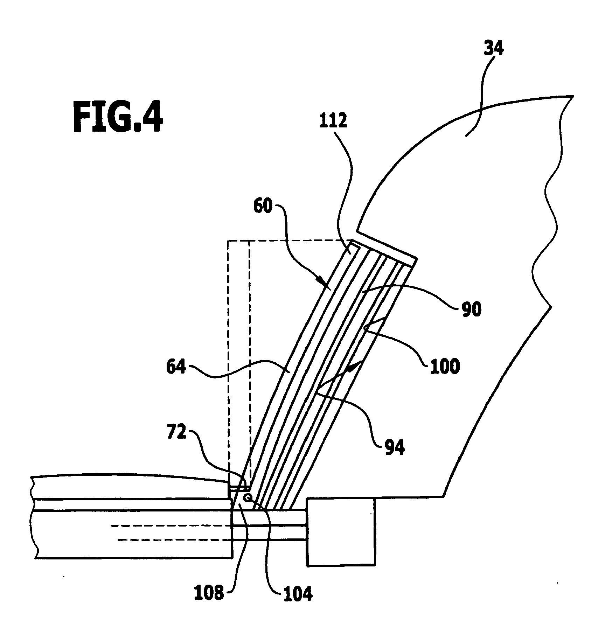

Steht allerdings der Träger 52 in seiner eingefahrenen, in Figur 3 dargestellten Stellung, so besteht keine Notwendigkeit mehr, die Führungselemente 60, 62 in ihrer Gebrauchsstellung zu halten und diese können somit in in den Überrollbügeln 34, 36 vorgesehene Aufnahmen 94, 96 hineinbewegt werden, in welchen diese in ihrer Nichtgebrauchsstellung stehen, wobei die Aufnahmen 94, 96 nicht nur die in Nichtgebrauchsstellung stehenden Führungselemente 60, 62 aufnehmen, sondern, wie exemplarisch in Figur 4 im Fall der Aufnahme 94 dargestellt, so ausgebildet sind, dass von diesen auch die jeweiligen Strömungsschutzelemente 90, 92 aufgenommen werden kann.

Zweckmäßigerweise sind die Aufnahmen, wie in Figur 3 dargestellt, in einer Verkleidung 98 der Überrollbügel 34, 36 vorgesehen, welche zusammen mit einem Versteifungselement 99 den jeweiligen Überrollbügel 34, 36 bildet.

Im dargestellten Ausführungsbeispiel ist der jeweilige Strömungsschutz 90, 92 ebenfalls aus einem biegeschlaffen Flachmaterial ausgebildet, dass einerseits an dem jeweiligen Führungselement 60, 62, und zwar an einer der Aufnahme 94 bzw. 96 zugewandten Seite, gehalten ist und andererseits in der Aufnahme 94 bzw. 96 an einer Innenwand 100, 102, wobei das jeweilige Strömungsschutzelement 90, 92 beim Hineinbewegen des jeweiligen Führungselements 60, 62 sich zusammenfaltet, um den Raumbedarf für das jeweilige Strömungsschutzelement 90, 92 zu minimieren.

Das Zusammenfalten des jeweiligen Strömungsschutzes 90 bzw. 92 kann dabei durch eine beliebige Faltung erfolgen, oder dadurch, dass die Strömungsschutzelemente 90, 92 fächerartig ausgebildet und in der Lage sind, sich fächerartig, das heißt mit einer vorgegebenen Faltung, zusammenzufalten.

In der Nichtgebrauchsstellung stehen bei diesem Ausführungsbeispiel die Führungselemente 60, 62 vorzugsweise in der jeweiligen Aufnahme 94, 96 so, dass diese nicht über die jeweils einander zugewandten Seiten 84, 86 der Überrollbügel 34, 36 überstehen und vollständig in der jeweiligen Aufnahme 94, 96 versenkt angeordnet sind.

Zum Bewegen der Führungselemente 60, 62 von der Nichtgebrauchsstellung, durchgezogen dargestellt in Figur 4, in die Gebrauchsstellung, gestrichelt dargestellt in Figur 4, ist bei dem dargestellten Ausführungsbeispiel das jeweilige Führungselement 60, 62 mit einem Schwenklager 104, 106 schwenkbar an der Karosserie 12 gelagert, wobei das Schwenklager 104, 106 im Bereich eines jeweils der Karosserie 12 oder der Welle 56 zugewandten unteren Endes 108, 110 angreift und außerdem an der Karosserie 12, beispielsweise im Bereich der Oberseite 54 der Karosserie 12, gehalten ist.

Damit lässt sich jeweils ein oberes Ende 112, 114 des jeweiligen Führungselements 60, 62 in einfacher Art und Weise zwischen der Nichtgebrauchsstellung und der Gebrauchsstellung jeweils unter Aufspannen der entsprechenden Strömungsschutzelemente 90 bzw. 92 bewegen.

Vorzugsweise bleibt auch in der eingefahrenen Stellung des Trägers 52 dieser mit den Führungskörpern 72, 74 in Eingriff mit den Führungen 64, 66 der Führungselemente 60, 62, auch wenn diese in die Aufnahmen 94, 96 hineinbewegt sind und in ihrer Nichtgebrauchsstellung stehen.

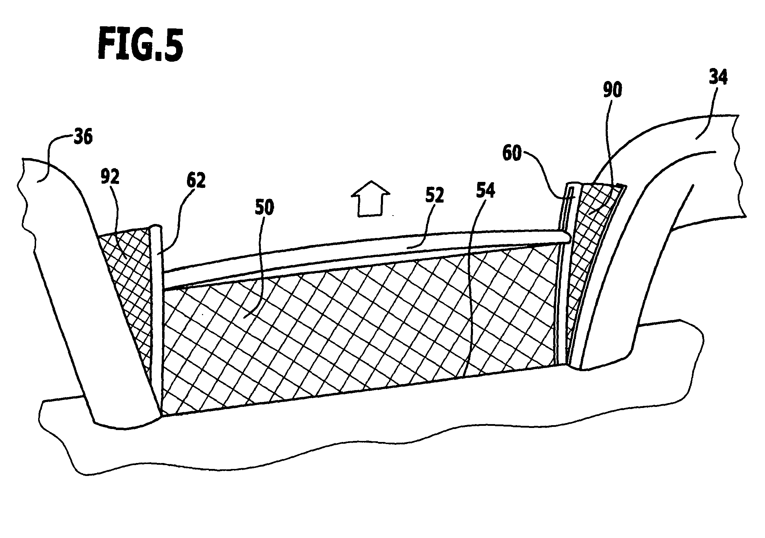

Zum Bewegen des Trägers 52 in die ausgefahrene Stellung lassen sich entweder die Führungselemente 60, 62 vor Bewegen des Trägers 52 aus der eingefahrenen Stellung in die ausgefahrene Stellung von der Nichtgebrauchsstellung in die Gebrauchsstellung bewegen oder es erfolgt beim Bewegen des Trägers 52 aus der eingefahrenen Stellung heraus aufgrund einer Zugwirkung der Führungskörper 72, 74 auf die Führungen 64, 66 ein Herausschwenken der Führungselemente 60, 62 von der Nichtgebrauchsstellung in die Gebrauchsstellung, die in Figur 5 in einer Zwischenstellung dargestellt ist, wobei beim Herausbewegen der Führungselemente 60, 62 aus der in Figur 3 dargestellten Nichtgebrauchsstellung in die Gebrauchsstellung ein Aufspannen der jeweiligen Strömungsschutzelemente 90 bzw. 92 erfolgt.

Bei einem zweiten Ausführungsbeispiel einer erfindungsgemäßen Windstoppeinrichtung 30, welche eine Variante des ersten Ausführungsbeispiels darstellt, erfolgt kein Falten der jeweiligen Strömungsschutzelemente 90 bzw. 92 beim Hineinbewegen des jeweiligen Führungselements 60 bzw. 62 in die Aufnahme 94, 96, sondern in der jeweiligen Aufnahme 94, 96 ist eine konisch ausgebildete Welle 120 um eine Achse 122 drehbar gelagert, wobei auf die Welle 120 der jeweilige Strömungsschutz, in diesem Fall das Strömungsschutzelement 90 aufwickelbar ist.

Da das jeweilige Strömungsschutzelement 90' im aufgespannten Zustand eine trapezähnliche oder dreieckähnliche Form aufweist, ist die Welle konisch ausgebildet und weist an ihrem der Oberseite 54 der Karosserie 12 abgewandten Ende 124 einen größeren Durchmesser auf als an ihrem der Oberseite 54 der Karosserie zugewandten Ende 126, um das Strömungsschutzelement 90 über seine ganze Erstreckung von der Oberseite 54 der Karosserie 12 weg aufwickeln zu können.

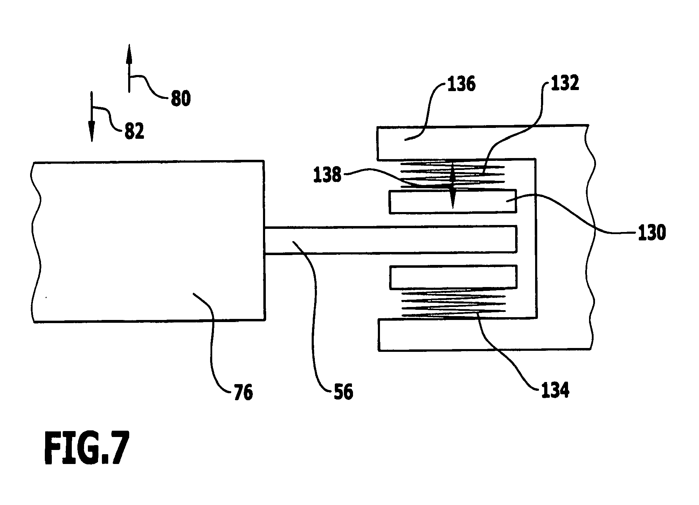

Bei einem dritten Ausführungsbeispiel, dargestellt in Figur 7, ist die Welle 56 in einer Lagerhülse 130 drehbar gelagert, während die Lagerhülse 30 ihrerseits über Federelemente 132 und 134 in einer Lageraufnahme 136 abgestützt sind, wobei die Federelemente 132 und 134 eine Bewegbarkeit der Lagerhülse 130 in einer Richtung 138 zulassen, die mindestens in Richtung der Ausfahrrichtung 80 und der Einfahrrichtung 82 verläuft.

Damit besteht die Möglichkeit, bei vollständig abgewickelter Flachmaterialbahn 50 dann, wenn der Träger 52 in einer ausgefahrenen Endstellung steht, einerseits in der Richtung 138 Toleranzen auszugleichen und andererseits durch die Federelemente 132 und 134 mit einer von der Oberseite 54 der Karosserie 12 weggerichteten Spannkraft auf die Welle 56 einzuwirken, so dass die Welle 56 ihrerseits wieder eine Spannkraft auf die Flachmaterialbahn 50 ausübt, um diese in der ausgefahrenen Endstellung des Trägers 52 möglichst optimal gespannt zwischen dem an den Führungselementen 60, 62 fixierten Träger 52 und der Welle 56 optimal gespannt und somit flatterfrei zu halten.

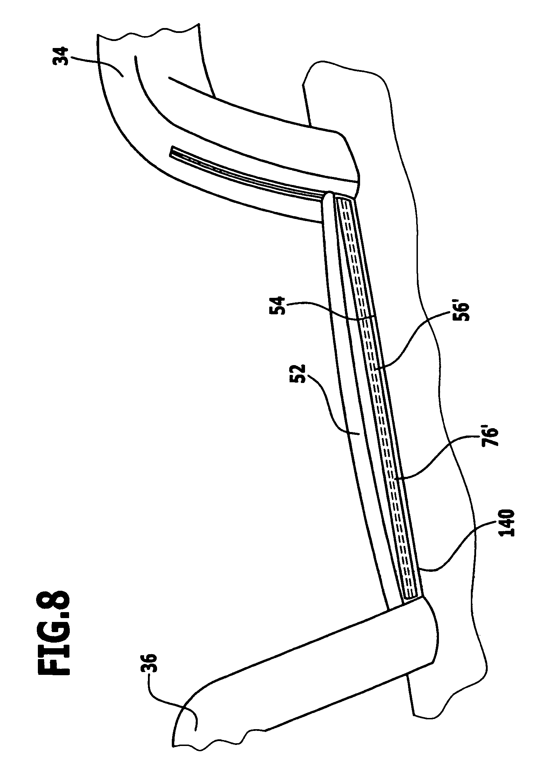

Bei einem vierten Ausführungsbeispiel eines erfindungsgemäßen Cabrio-Fahrzeugs, dargestellt in den Figuren 8, 9 und 10, sind die diejenigen Elemente, die mit denen der voranstehenden Ausführungsbeispiele identisch sind, mit denselben Bezugszeichen versehen, so dass auf die voranstehenden Ausführungen hierzu verwiesen werden kann.

Im Gegensatz zu den voranstehenden Ausführungsbeispielen, insbesondere dem ersten Ausführungsbeispiel, ist die Welle 56' nicht unterhalb der Oberseite 54 der Karosserie 12 angeordnet, sondern sitzt in einem Gehäuse 140, welches auf der Oberseite 54 der Karosserie 12 aufliegt und sich zwischen den Überrollbügeln 34, 36 erstreckt.

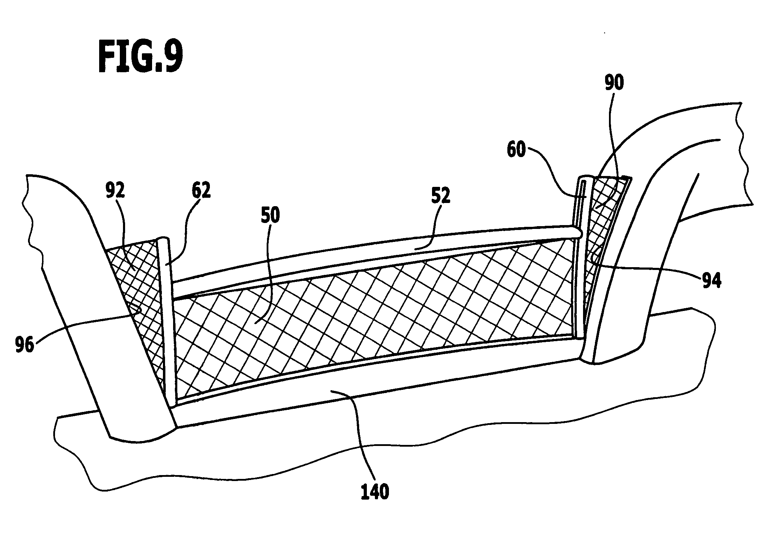

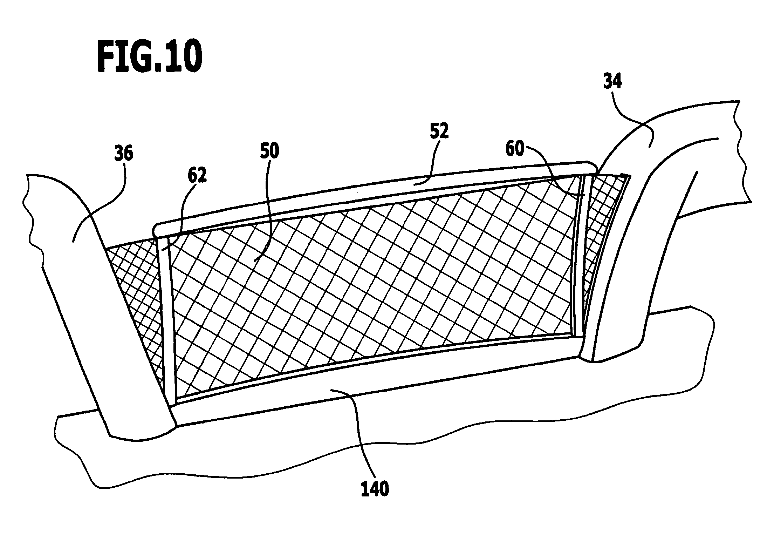

Bei diesem Ausführungsbeispiel bildet der Träger 52 einen Deckel des Gehäuses 140, aus welchem durch Abwickeln des Wickels 76' in dem Gehäuse 140 die Flachmaterialbahn 50 ausfahrbar ist, wie in den Figuren 9 und 10 dargestellt.

Dabei erfolgt ebenfalls ein Bewegen der Führungselemente 60, 62 aus der in Figur 8 dargestellten Nichtgebrauchsstellung in die in Figur 9 und 10 dargestellte Gebrauchsstellung, um den die Flachmaterialbahn 50 haltenden Träger 52 zu führen und in der ausgefahrenen Endstellung zu fixieren.

Dabei erfolgt in gleicher Weise wie im Zusammenhang mit den voranstehenden Ausführungsbeispielen beschrieben, ein Herausbewegen der jeweiligen Strömungsschutzelemente 90, 92 aus den Aufnahmen 94, 96.

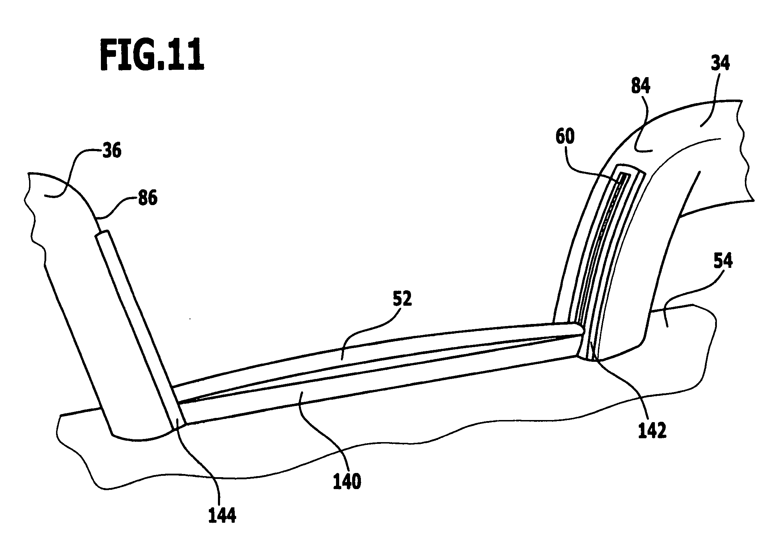

Bei einem fünften Ausführungsbeispiel der erfindungsgemäßen Lösung, dargestellt in den Figuren 11 bis 14, ist in gleicher Weise bei dem vierten Ausführungsbeispiel das Gehäuse 140 vorhanden, in welchem die Welle 56 mit dem Wickel 76 der Flachmaterialbahn 50 angeordnet ist und welches durch den Träger 52 abdeckbar ist, wobei das Gehäuse 140 als Ganzes auf der Oberseite 54 der Karosserie 12 aufsitzt und sich zwischen den Überrollbügeln 34, 36 erstreckt.

Im Gegensatz zum vierten Ausführungsbeispiel sind an das Gehäuse 140 noch seitliche Gehäuseflügel 142 und 144 angeformt, die sich ausgehend vom Gehäuse 140 längs der einander zugewandten Seiten 84 und 86 der Überrollbügel 34, 36 erstrecken und an diesen anliegen, vorzugsweise sich Oberflächen derselben angepasst an diese anschmiegen.

Die Gehäuseflügel 142 und 144 bilden dabei die Aufnahmen 94, 96, in welche die Führungselemente 60, 62 in ihrer Nichtgebrauchsstellung versenkbar sind und welche außerdem auch die Strömungsschutzelemente 90, 92 in der Nichtgebrauchsstellung aufnehmen.

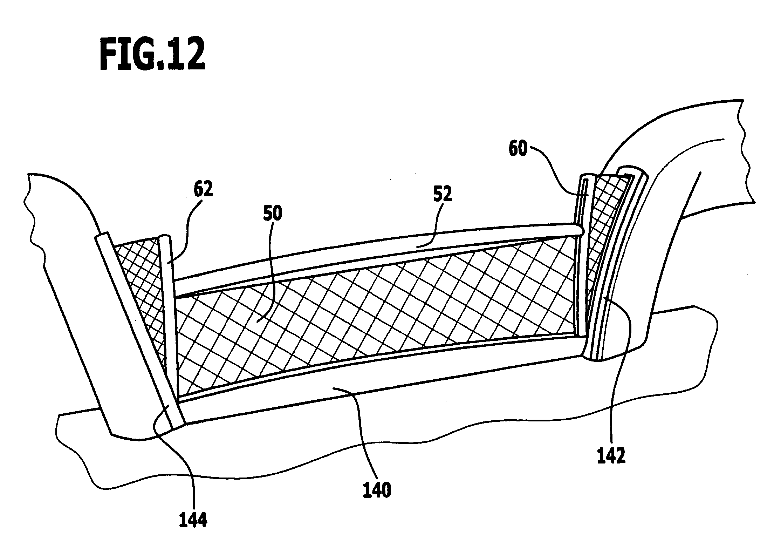

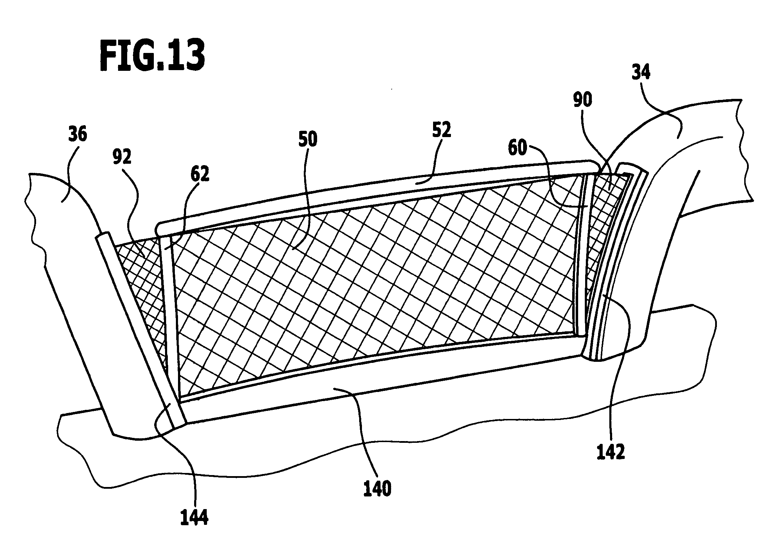

In gleicher Weise wie bei den voranstehenden Ausführungsbeispielen sind die Führungselemente 60, 62 aus den Aufnahmen in den Gehäuseflügeln 142 und 144 herausbewegbar und zwar in die Gebrauchsstellung, wie in Figur 12 dargestellt, in welcher sie den Träger 52 auf seinem Weg zwischen der eingefahrenen Endstellung, dargestellt in Figur 11, in die ausgefahrene Endstellung, dargestellt in Figur 13, führen und außerdem in der ausgefahrenen Endstellung, fixiert halten.

Beim Verschwenken der Führungselemente 60, 62 aus der Nichtgebrauchsstellung in den Gehäuseflügeln 142, 144 heraus in die Gebrauchsstellung erfolgt gleichzeitig auch wieder ein Entfalten der Strömungsschutzelemente 90, 92, so wie dies im Zusammenhang mit den voranstehenden Ausführungsbeispielen beschrieben wurde.

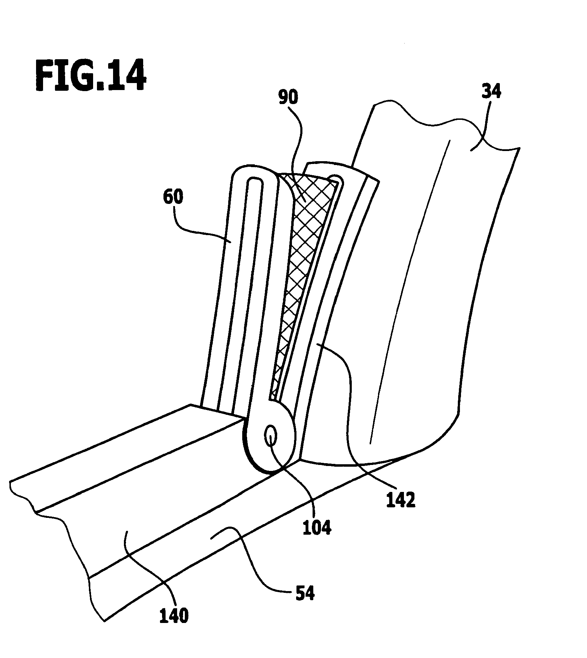

Bei diesem Ausführungsbeispiel sind dann, wie verdeutlicht nochmals in Figur 14 dargestellt, die Führungselemente 60, 62 mit dem Schwenklager 104 bzw. 106 unmittelbar an dem Gehäuse 140 gelagert und somit relativ zum Gehäuse 140 und den Gehäuseflügeln 142, 144 verschwenkbar, um die Führungselemente 60, 62 zwischen der Gebrauchsstellung und der Nichtgebrauchsstellung hin- und herbewegen zu können.

Bei dem fünften Ausführungsbeispiel stellt das Gehäuse 140 mit den Gehäuseflügeln 142 und 144 zusammen eine abnehmbare Einheit dar, die als Ganzes von der Karosserie 12 und somit von der Oberseite 54 und den Überrollbügeln 34, 36 lösbar ist und bei Nichtgebrauch beispielsweise in einem Gepäckraum oder an einem anderen Ort innerhalb der Karosserie 12 somit verstaut werden kann.

## Patentansprüche

1. Windstoppeinrichtung (30) für Kraftfahrzeuge, insbesondere für Cabrio-Fahrzeuge, mit zwei Überrollschutzeinheiten (34, 36), umfassend eine auf einer Welle (56) aufwickelbare Flachmaterialbahn (50), die von einer aufgewickelten und eingefahrenen Stellung in eine abgewickelte ausgefahrene und sich flächenhaft erstreckende Stellung, und umgekehrt, bringbar ist, mit einem die Flachmaterialbahn (50) an einem sich ungefähr parallel zur Welle (56) erstreckenden Endbereich haltenden Träger (52), wobei die Flachmaterialbahn (50) mit dem Träger (52) zwischen den Überrollschutzeinheiten (34, 36) angeordnet ist,
**dadurch gekennzeichnet, dass** der Träger (52) endseitig in sich über einer Oberseite (54) der Karosserie erhebenden Führungen (64, 66) von seitlichen, sich in einer Ausfahrrichtung (80) erstreckenden Führungselementen (60, 62) zwischen der ausgefahrenen und der eingefahrenen Stellung bewegbar geführt ist und dass die Führungselemente (60, 62) in einer quer zur Ausfahrrichtung (80) verlaufenden Bewegungsrichtung von einer einen Zwischenraum zwischen den Überrollschutzeinheiten (34, 36) im Wesentlichen freigebenden Nichtgebrauchsstellung, in welcher die Führungselemente (60, 62) so angeordnet sind, dass deren obere Enden (112, 114) einen größeren Abstand voneinander aufweisen als deren untere an die Oberseite (54) der Karosserie (12) angrenzende Enden (108, 110), in eine den Träger (52) in Ausfahrrichtung (80) führende Gebrauchsstellung bringbar sind, in welcher sich die Führungen (64, 66) parallel zueinander erstrecken.

2. Windstoppeinrichtung nach Anspruch 1, **dadurch gekennzeichnet, dass** die Führungselemente (60, 62) durch eine Schwenkbewegung zwischen der Nichtgebrauchsstellung und der Gebrauchsstellung bewegbar sind.

3. Windstoppeinrichtung nach einem der voranstehenden Ansprüche, **dadurch gekennzeichnet, dass** ein Schwenklager (104, 106) im Bereich eines unteren, der Karosserie (12) zugewandeten Endes (108, 110) der Führungselemente (60, 62) angeordnet ist.

4. Windstoppeinrichtung nach einem der voranstehenden Ansprüche, **dadurch gekennzeichnet, dass** die Führungselemente (60, 62) an der Fahrzeugkarosserie (12) bewegbar gehalten sind.

5. Windstoppeinrichtung nach Anspruch 4, **dadurch gekennzeichnet, dass** die Führungselemente an den Überrollschutzeinheiten (34, 36) bewegbar gelagert sind.

6. Windstoppeinrichtung nach einem der voranstehenden Ansprüche, **dadurch gekennzeichnet, dass** die Führungselemente (60, 62) in der Gebrauchsstellung ungefähr parallel zueinander ausgerichtet sind.

7. Windstoppeinrichtung nach einem der voranstehenden Ansprüche, **dadurch gekennzeichnet, dass** die Führungselemente (60, 62) in der Nichtgebrauchsstellung im Bereich der Überrollschutzeinheiten (34, 36) angeordnet sind.

8. Windstoppeinrichtung nach einem der voranstehenden Ansprüche, **dadurch gekennzeichnet, dass** die Führungselemente (60, 62) in der Nichtgebrauchsstellung zumindest teilweise in jeweils eine Aufnahme (94, 96) hineinbewegbar sind.

9. Windstoppeinrichtung nach Anspruch 8, **dadurch gekennzeichnet, dass** die Aufnahmen (94, 96) in den Überrollschutzeinheiten (34, 36) vorgesehen sind.

10. Windstoppeinrichtung nach einem der voranstehenden Ansprüche, **dadurch gekennzeichnet, dass** in der Gebrauchsstellung der Führungselemente (60, 62) zwischen den Führungselementen (60, 62) und den diesen zugewandten Überrollschutzeinrichtungen (34, 36) Strömungsschutzelemente (90, 92) vorgesehen sind.

11. Windstoppeinrichtung nach Anspruch 10, **dadurch gekennzeichnet, dass** das Strömungsschutzelement von einem Aufspannzustand in einen Verstauzustand bringbar ist.

12. Windstoppeinrichtung nach Anspruch 10 oder 11, **dadurch gekennzeichnet, dass** das jeweilige Strömungsschutzelement (90, 92) im Verstauzustand in einer Aufnahme (94, 96) aufgenommen ist.

13. Windstoppeinrichtung nach Anspruch 12, **dadurch gekennzeichnet, dass** die Aufnahme (94, 96) in der jeweiligen Überrollschutzeinheit (34, 36) vorgesehen ist.

14. Windstoppeinrichtung nach Anspruch 12 oder 13, **dadurch gekennzeichnet, dass** die Aufnahme (94, 96) für das jeweilige Strömungsschutzelement (90, 92) auch eine Aufnahme für das entsprechende Führungselement (60, 62) darstellt.

## Claims

1. Wind stop device (30) for motor vehicles, in particular for convertible vehicles, with two rollover protection units (34, 36), comprising a web of flat material (50) adapted to be wound onto a shaft (56) and to be brought from a wound-up and retracted position into an unwound, extended and areally extending position and vice versa, with a support (52) holding the web of flat material (50) at an end area extending approximately parallel to the shaft (56), wherein the web of flat material (50) is arranged with the support (52) between the rollover protection units (34, 36),
**characterized in that** the support (52) is guided at the ends for movement between the extended and the retracted positions in guideways (64, 66) of lateral guide elements (60, 62) extending in a direction of extension (80), said guideways rising above an upper side (54) of the vehicle body, and that the guide elements (60, 62) are adapted to be brought in a direction of movement running transversely to the direction of extension (80) from a position of non-use essentially freeing up a space between the rollover protection units (34, 36), the guide elements (60, 62) being arranged in said position of non-use such that their upper ends (112, 114) have a greater distance from one another than their lower ends (108, 110) bordering on the upper side (54) of the vehicle body (12), into a position of use guiding the support (52) in a direction of extension (80), the guideways (64, 66) extending parallel to one another in said position of use.

2. Wind stop device as defined in claim 1, **characterized in that** the guide elements (60, 62) are movable between the position of non-use and the position of use by means of a pivoting movement.

3. Wind stop device as defined in either one of the preceding claims, **characterized in that** a pivot bearing (104, 106) is arranged in the area of a lower end (108, 110) of the guide elements (60, 62) facing the vehicle body (12).

4. Wind stop device as defined in any one of the preceding claims, **characterized in that** the guide elements (60, 62) are held on the vehicle body (12) so as to be movable.

5. Wind stop device as defined in claim 4, **characterized in that** the guide elements are mounted on the rollover protection units (34, 36) so as to be movable.

6. Wind stop device as defined in any one of the preceding claims, **characterized in that** the guide elements (60, 62) are aligned approximately parallel to one another in the position of use.

7. Wind stop device as defined in any one of the preceding claims, **characterized in that** the guide elements (60, 62) are arranged in the area of the rollover protection units (34, 36) in the position of non-use.

8. Wind stop device as defined in any one of the preceding claims, **characterized in that** the guide elements (60, 62) are each movable at least partially into a receptacle (94, 96) in the position of non-use.

9. Wind stop device as defined in claim 8, **characterized in that** the receptacles (94, 96) are provided in the rollover protection units (34, 36).

10. Wind stop device as defined in any one of the preceding claims, **characterized in that** in the position of use of the guide elements (60, 62) flow protection elements (90, 92) are provided between the guide elements (60, 62) and the rollover protection units (34, 36) facing them.

11. Wind stop device as defined in claim 10, **characterized in that** the flow protection element is adapted to be brought from a stretched state into a stowing state.

12. Wind stop device as defined in claim 10 or 11, **characterized in that** the respective flow protection element (90, 92) is accommodated in a receptacle (94, 96) in the stowing state.

13. Wind stop device as defined in claim 12, **characterized in that** the receptacle (94, 96) is provided in the respective rollover protection unit (34, 36).

14. Wind stop device as defined in claim 12 or 13, **characterized in that** the receptacle (94, 96) for the respective flow protection element (90, 92) also represents a receptacle for the corresponding guide element (60, 62).

## Revendications

1. Dispositif pare-vent (30) pour véhicules automobiles, en particulier pour voitures cabriolet, avec deux unités de protection contre les tonneaux (34, 36), comprenant une bande de matériau plat (50) enroulable sur un axe (56), laquelle peut être amenée d'une position d'enroulement et de retrait à une position de déroulement et de déploiement et d'extension en nappe, et inversement, et avec un support (52) maintenant la bande de matériau plat (50) contre une zone d'extrémité s'étendant sensiblement parallèlement à l'axe (56), la bande de matériau plat (50) avec le support (52) étant disposée entre les unités de protection contre les tonneaux (34, 36), **caractérisé en ce que** le support (52) est guidé à ses extrémités de manière à être mobile entre la position de déploiement et la position de retrait dans des glissières (64, 66) d'éléments de guidage (60, 62) latéraux qui s'étendent dans une direction de déploiement (80) les glissières étant dressées au-dessus d'un sommet (54) de la carrosserie, et **en ce que** les éléments de guidage (60, 62) peuvent, dans une direction de déplacement transversale à la direction de déploiement (80), être amenés d'une position de non-utilisation dégageant sensiblement un espacement entre les unités de protection contre les tonneaux (34, 36), où les éléments de guidage (60, 62) sont disposés de telle manière que leurs extrémités supérieures (112, 114) présentent un intervalle entre elles supérieur à celui entre leurs extrémités inférieures (108, 110) adjacentes au sommet (54) de la carrosserie (12), vers une position d'utilisation guidant le support (52) en direction de déploiement (80), où les glissières (64, 66) s'étendent parallèlement l'une à l'autre.

2. Dispositif pare-vent selon la revendication 1, **caractérisé en ce que** les éléments de guidage (60, 62) sont déplaçables par mouvement de pivotement entre la position de non-utilisation et la position d'utilisation.

3. Dispositif pare-vent selon l'une des revendications précédentes, **caractérisé en ce qu'**un palier d'articulation (104, 106) est disposé au niveau d'une extrémité (108, 110) inférieure, opposée à la carrosserie (12), des éléments de guidage (60, 62).

4. Dispositif pare-vent selon l'une des revendications précédentes, **caractérisé en ce que** les éléments de guidage (60, 62) sont maintenus de manière à être mobiles contre la carrosserie (12) du véhicule.

5. Dispositif pare-vent selon la revendication 4, **caractérisé en ce que** les éléments de guidage sont montés de manière à être mobiles sur les unités de protection contre les tonneaux (34, 36).

6. Dispositif pare-vent selon l'une des revendications précédentes, **caractérisé en ce qu'**en position d'utilisation, les éléments de guidage (60, 62) sont disposés sensiblement parallèlement l'un à l'autre.

7. Dispositif pare-vent selon l'une des revendications précédentes, **caractérisé en ce qu'**en position de non-utilisation, les éléments de guidage (60, 62) sont disposés au niveau des unités de protection contre les tonneaux (34, 36).

8. Dispositif pare-vent selon l'une des revendications précédentes, **caractérisé en ce qu'**en position de non-utilisation, les éléments de guidage (60, 62) sont au moins partiellement mobiles dans des logements (94, 96) respectifs.

9. Dispositif pare-vent selon la revendication 8, **caractérisé en ce que** les logements (94, 96) sont prévus dans les unités de protection contre les tonneaux (34, 36).

10. Dispositif pare-vent selon l'une des revendications précédentes, **caractérisé en ce qu'**en position d'utilisation des éléments de guidage (60, 62), des éléments de protection contre les courants (90, 92) sont prévus entre les éléments de guidage (60, 62) et les unités de protection contre les tonneaux (34, 36) opposées à ceux-ci.

11. Dispositif pare-vent selon la revendication 10, **caractérisé en ce que** l'élément de protection contre les courants peut être amené d'un état de déploiement à un état d'arrimage.

12. Dispositif pare-vent selon la revendication 10 ou la revendication 11, **caractérisé en ce que** l'élément de protection contre les courants (90, 92) est serré dans un logement (94, 96) en état d'arrimage.

13. Dispositif pare-vent selon la revendication 12, **caractérisé en ce que** le logement (94, 96) est prévu dans l'unité de protection contre les tonneaux (34, 36) correspondante.

14. Dispositif pare-vent selon la revendication 12 ou la revendication 13, **caractérisé en ce que** le logement (94, 96) pour l'élément de protection contre les courants (90, 92) correspondant représente aussi un logement pour l'élément de guidage (60, 62) correspondant.
